Europäisches Patentamt

European Patent Office

Office européen des brevets

(11) Veröffentlichungsnummer: **0 239 096 B1**

(19)

(12) **EUROPÄISCHE PATENTSCHRIFT**

(45) Veröffentlichungstag der Patentschrift: **08.01.92**

(51) Int. Cl.5: **G11B 5/706, C01G 37/027**

(21) Anmeldenummer: **87104407.9**

(22) Anmeldetag: **25.03.87**

(54) **Verfahren zur Herstellung von ferromagnetischem Chromdioxid.**

(30) Priorität: **26.03.86 DE 3610192**

(43) Veröffentlichungstag der Anmeldung:
**30.09.87 Patentblatt 87/40**

(45) Bekanntmachung des Hinweises auf die
Patenterteilung:
**08.01.92 Patentblatt 92/02**

(84) Benannte Vertragsstaaten:
**DE FR GB NL**

(56) Entgegenhaltungen:
**EP-A- 0 027 640**
**FR-A- 1 263 098**
**GB-A- 922 317**

(73) Patentinhaber: **BASF Aktiengesellschaft**
**Carl-Bosch-Strasse 38**
**W-6700 Ludwigshafen(DE)**

(72) Erfinder: **Mueller, Norbert, Dr.**
**Maximilianstrasse 23**
**W-6701 Friedelsheim(DE)**
Erfinder: **Ohlinger, Manfred, Dr.**
**Anselm-Feuerbach-Strasse 13**
**W-6710 Frankenthal(DE)**
Erfinder: **Walter, Egon**
**Johann-Mehring-Strasse 14**
**W-6711 Kleinniedesheim(DE)**

**Beschreibung**

Die Erfindung betrifft ein Verfahren zur Herstellung von mit Fremdelementen modifiziertem hochkoerzitivem Chromdioxid.

Es sind eine Reihe von Verfahren bekannt, bei denen zur Herstellung von ferromagnetischem Chromdioxid von Chromoxiden oder von Mischungen von Chromoxiden mit einer durchschnittlichen Wertigkeit von mindestens 4 ausgegangen wird und das Verfahren bei erhöhtem Druck und erhöhter Temperatur in Anwesenheit von Wasser durchgeführt wird. Außerdem ist mehrfach beschrieben, daß durch Modifizierung eines solchen Chromdioxids mit einer Reihe von Metallen eine Verbesserung der magnetischen Eigenschaften des Endprodukts möglich wird. So beschreibt die US-A 30 34 988, ein verbessertes Chromdioxid durch die Umsetzung von Chromtrioxid in Gegenwart von einem Metall der Ordnungszahl 22 bis 28 bzw. einer Verbindung desselben sowie einem Element der Grupp V des Periodensystems und gegebenenfalls Wasser bei Temperaturen zwischen 300 und 500 °C und Drücken von bis zu 2940 bar zu erhalten. Des weiteren ist aus der DE-C 20 22 820 bekannt, daß ein Chromdioxid mit hoher Koerzitivfeldstärke dann erhalten werden kann, wenn bei dem üblichen Verfahren unter Verwendung von Chrom(III)- und Chrom(VI)oxiden außer einem Zusatz von Antimon, Selen, Tellur oder deren Verbindungen als einem ersten Modifizierungsmittel Eisen in der Form nadelförmiger Kristalle und/oder nadelförmiger Eisenoxid-Teilchen als zweites Modifizierungsmittel eingesetzt wird. Eine weitere Verbesserung der magnetischen Eigenschaften des Chromdioxids ist gemäß der EP-A 27 640 durch den Einsatz der kubischen Modifikation des Antimonoxids, des Senarmontits, zu erreichen.

Diese bekannten Verfahren liefern auf Grund der inzwischen optimalen Auswahl der Modifizierungsmittel ein in seinen magnetischen Eigenschaften hervorragendes magnetisches Material für die Verwendung bei der Herstellung von magnetischen Aufzeichnungsträgern. Da diese Modifizierungsmittel schon in Bruchteilen von Prozenten des gesamten Reaktionsansatzes wirksam sind, bedürfen sie einer sehr genauen Dosierung, damit das für den jeweiligen Anwendungszweck optimale Eigenschaftsprofil erreicht wird. In großtechnischen Produktionsverfahren, insbesondere bei einer wegen der Hochdrucksynthese angebrachten Batchfahrweise stellt die genaue Einwaage von derart geringen Mengen eine Fehlermöglichkeit dar. Hinzu kommt, daß gerade die vorwiegend eingesetzten Modifizierungsmittel, wie die Antimon-, Selen- und Tellurverbindungen wegen ihrer Giftigkeit sehr vorsichtig zu handhaben sind.

Es bestand daher die Aufgabe, das bekannte Verfahren zur Herstellung von nadelförmigem, ferromagnetischem Chromdioxid so zu gestalten, daß der Einsatz der zum Teil giftigen Modifizierungsmittel in der für das jeweils angestrebte Eigenschaftsprofil des resultierenden Chromdioxids äußerst genauen Dosierung und Handhabungssicherheit erfolgen kann und eine Abänderung der bewährten Verfahrensdurchführung nicht erforderlich wird.

Es wurde nun gefunden, daß bei einem Verfahren zur Herstellung von ferromagnetischem Chromdioxid durch Mischen der Oxide des 3-wertigen und 6-wertigen Chroms in Wasser unter Zusatz von mindestens einem Modifizierungsmittel und anschließendes Erhitzen der resultierenden Mischung auf eine Temperatur zwischen 240 und 500 °C in einem Reaktor bei einem Druck zwischen 100 und 700 bar die gestellte Aufgabe gelöst wird, wenn das Modifizierungsmittel in einer vorgegebenen Menge in einer staubdichten Verpackung zugesetzt wird, mit der Maßgabe, daß das Verpackungsmaterial in Wasser löslich ist und/oder in Wasser zerfällt.

Die staubdichten Verpackungen, welche das Modifizierungsmittel enthalten, bestehen aus Materialien, welche in Wasser löslich sind oder zumindest in Wasser zerfallen und damit das enthaltene Modifizierungsmittel der Reaktionsmischung zuführen. Als Materialien kommen die bekannten in Frage, insbesondere Verpackungen, meist kleine Beutel aus ungeleimtem Papier, aus Polyvinylalkoholfolien oder entsprechenden Zubereitungen aus Gelatine. Diese und andere in Wasser lösliche oder in Wasser zerfallende Stoffe sind im Rahmen der Chromdioxidsynthese ohne Einfluß, da sie von überschüssiger Chromsäure völlig zu $CO_2$ oxidiert werden.

Mit derartigen Verpackungen lassen sich alle Modifizierungsmittel, insbesondere aber die aus Arbeitsschutzgründen vorsichtig zu handhabenden Antimon-, Tellur- oder Selenverbindungen in einer automatischen Abfüllanlage bereits im voraus in diese Verpackungen, vorzugsweise in Polyvinylalkoholbeutel, abfüllen. Dazu wird beispielsweise ein mit dem Modifizierungsmittel gefüllter Behälter über einen drehbaren Hubmechanismus auf ein Dosiersystem aufgesetzt. Das Modifizierungsmittel gelangt über eine Austragsschnecke mittels eines programmgesteuerten Wiegesystems dosiert innerhalb einer gegenüber dem Umgebung abgeschlossenen und über Spezialfilter abgesaugten Kabine in die Polyvinylalkoholbeutel, die dann in einem weiteren Schritt automatisch verschweißt werden. Die Abfüllanlage ist nach dem Produktverhalten und den Mengen der benötigten Modifizierungsmittel aufgebaut.

Diese nun gefahrlos zu handhabenden Verpackungseinheiten lassen sich innerhalb des Produktionsablaufs ohne besondere zusätzliche Maßnahmen verwenden und gestatten auch eine weitgehend sichere Dosierung der im Vergleich zu den anderen Einsatzstoffen geringen aber besonders exakt einzusetzenden Mengen, welche sich in einer Größenordnung von 0,05 bis etwa 1,5 % bezogen auf das Endprodukt bewegen.

Die Erfindung bezieht sich auf bekannte Verfahren zur Herstellung von ferromagnetischem Chromdioxid bei erhöhtem Druck und erhöhter Temperatur in Anwesenheit von Wasser. So wird beispielsweise beim vorliegenden Verfahren in einem Reaktionsbecher Wasser vorgelegt, unter Rühren Chromsäure eingetragen und die Modifizierungsmittel gemäß der erfindungsgemäßen Ausgestaltung des Verfahrens zugegeben. Unter weiterem Rühren wird dann Chrom(III)oxid in der für die Synproportionierungsreaktion erforderlichen stöchiometrischen Menge hinzugefügt. Die Bildung des Chromdioxids erfolgt in der sich anschließenden Behandlung der Mischung im Hochdruckreaktor bei 100 bis 700 bar und 240 bis 500° C. Nach 10 bis 50 Stunden wird das Chromdioxid mechanisch aus dem Reaktionsbecher entfernt und in bekannter Weise stabilisiert. Das so hergestellte Chromdioxid besteht aus nadelförmigen Teilchen mit einer durchschnittlichen Teilchenlänge von 0,1 bis 2,0 µm, insbesondere 0,4 bis 0,9 µm bei einem Längen-/Dicken-Verhältnis von etwa 15 : 1 und einer nach BET bestimmten spezifischen Oberfläche zwischen 7 und 40 m²/g.

Die Erfindung sei anhand des folgenden Beispiels näher erläutert.

Beispiel

In einen Reaktionsbecher von 400 Volumenteilen Inhalt werden 225 Volumenteile Wasser vorgelegt. Dann werden unter Rühren zunächst 570 Teile Chromsäureanhydrid zugegeben. Nach 10 Minuten werden dazu 1,194 Teile Antimon(III)oxid mit einer spezifischen Oberfläche von 3,2 m²/g, eingeschweißt in einem PVA-Beutel, und 2,388 Teile nadelförmiges γ-Fe₂O₃ zugegeben. Danach werden unter ständigem Rühren 288 Teile Chrom(III)oxid eingetragen. Nach einer weiteren Rührzeit von 20 Minuten wird der Reaktionsbecher in einen Autoklaven eingebaut und letzterer innerhalb von 15 Stunden auf 270° C aufgeheizt. Dabei bildet sich Chromdioxid. Durch den zusätzlich entstehenden Sauerstoff baut sich ein Druck auf, der bei Anstieg auf 450 bar über ein Regelventil konstant gehalten wird. Nach einem Temperatur-Druckzyklus von 270° C und 450 bar über 15 Stunden wird der Reaktor innerhalb von 8 Stunden abgekühlt, entspannt und geöffnet. Das gebildete Chromdioxid wird aus dem Reaktor mechanisch ausgeräumt und gemahlen. Anschließend wird es in Wasser aufgeschlämmt, in welchem Eisen(II)-sulfat in der Menge gelöst ist, daß 2 Gew.-% des nadelförmigen CrO₂ oberflächlich zu Chrom(III)oxid reduziert werden. Nach einer Verweilzeit unter Rühren von 60 Minuten wird die Chromdioxid-Suspension filtriert, wobei die löslichen Anteile durch Waschen entfernt werden. Die Trocknung des CrO₂-Filtergutes erfolgt innerhalb von 24 Stunden bei 50° C.

An dem resultierenden Chromdioxid werden die magnetischen Eigenschaften mittels eines Schwingmagnetometers in einem Meßfeld von 160 kA/m bei einer mittleren Probendichte von 1,2 g/cm³ bestimmt, und zwar die Koerzitivfeldstärke zu 44 kA/m, die spezifische Remanenz zu 39 und die spezifische Magnetisierung zu 69 nTm³/g.

Patentansprüche

1. Verfahren zur Herstellung von ferromagnetischem Chromdioxid durch Mischen der Oxide des 3-wertigen und 6-wertigen Chroms in Wasser unter Zusatz von mindestens einem Modifizierungsmittel und anschließendes Erhitzen der resultierenden Mischung auf eine Temperatur zwischen 240 und 500° C in einem Reaktor bei einem Druck zwischen 100 und 700 bar, dadurch gekennzeichnet, das das Modifizierungsmittel in einer vorgegebenen Menge in einer staubdichten Verpackung zugesetzt wird, mit der Maßgabe, daß das Verpackungsmaterial in Wasser löslich ist oder in Wasser zerfällt.

Claims

1. A process for the preparation of ferromagnetic chromium dioxide by mixing the oxides of trivalent and hexavalent chromium in water with the addition of one or more modifiers and then heating the resulting mixture to 240-500° C in a reactor under from 100 to 700 bar, wherein the modifier is added in a predetermined amount in a dust-proof pack, with the proviso that the packaging material is water-soluble or decomposes in water.

Revendications

1. Procédé de préparation de bioxyde de chrome ferromagnétique par mélange des oxydes de chrome trivalent et hexavalent dans l'eau sous addition d'au moins un agent de modification et ensuite chauffage du mélange résultant à une température comprise entre 240 et 500 degrés C dans un réacteur, à une pression comprise entre 100 et 700 bar, caractérisé par le fait que l'agent de modification est ajouté en une quantité prédéterminée dans un emballage étanche à la poussière, sous réserve que le matériau d'emballage soit soluble dans l'eau ou se dégrade dans l'eau.